(19) **Europäisches Patentamt**
**European Patent Office**
**Office européen des brevets**

(11) **EP 1 268 692 B1**

(12) **EUROPÄISCHE PATENTSCHRIFT**

(45) Veröffentlichungstag und Bekanntmachung des Hinweises auf die Patenterteilung:
**04.07.2007 Patentblatt 2007/27**

(21) Anmeldenummer: **01907510.0**

(22) Anmeldetag: **08.02.2001**

(51) Int Cl.:
***C09D 151/00*** *(2006.01)* ***C08F 285/00*** *(2006.01)*
***C09D 5/02*** *(2006.01)*

(86) Internationale Anmeldenummer:
**PCT/EP2001/001342**

(87) Internationale Veröffentlichungsnummer:
**WO 2001/064802 (07.09.2001 Gazette 2001/36)**

(54) **WÄSSRIGE SPRÜHDOSENLACKE**

AQUEOUS AEROSOL PAINTS

PEINTURE AQUEUSE EN BOMBE A AEROSOL

(84) Benannte Vertragsstaaten:
**AT BE CH CY DE DK ES FI FR GB GR IE IT LI LU MC NL PT SE TR**

(30) Priorität: **03.03.2000 DE 10010417**

(43) Veröffentlichungstag der Anmeldung:
**02.01.2003 Patentblatt 2003/01**

(73) Patentinhaber: **BASF Coatings AG**
**48165 Münster (DE)**

(72) Erfinder:
• **RINK, Heinz-Peter**
**48153 Münster (DE)**
• **JUNG, Werner-Alfons**
**59387 Ascheberg (DE)**

• **WILKE, Guido**
**48151 Münster (DE)**
• **WEBER, Dieter**
**51491 Overath (DE)**
• **WEINTZ, Hans-Joachim**
**48308 Senden (DE)**

(74) Vertreter: **Leifert & Steffan**
**Patentanwälte**
**Burgplatz 21-22**
**40213 Düsseldorf (DE)**

(56) Entgegenhaltungen:
**EP-A- 0 300 612 DE-A- 19 511 771**
**GB-A- 1 440 282 US-A- 5 225 279**

**Beschreibung**

Die vorliegende Erfindung betrifft neue wäßrige Sprühdosenlacke. Des weiteren betrifft die vorliegende Erfindung die Verwendung der neuen wäßrigen Sprühdosenlacke zur Herstellung von Beschichtungen.

Die Sprühdosenlackierung ist eine Variante der Spritzlackierung, die vor allem im Heimwerker-Bereich von Bedeutung ist. Holzschutz-Beschichtungen, Bautenlacke und Autoreparaturlacke werden - in erster Linie für kleine Objekte und kleinere Schönheitsreparaturen - mittels Sprühdosenlackierung aufgebracht. Hiermit können sogar komplette Lackaufbauten von unterschiedlichen Grundierungen, Füllern bis hin zu Einschicht-Decklacken oder Zweischicht-Decklacken inklusive Metalleffekt-Lacken hergestellt werden.

Üblicherweise wurden und werden hierbei konventionelle, d. h., in organischen Lösemitteln gelöste Sprühdosenlacke (Aerosolsprays, Aerosollacke) angewandt. Aus Gründen des Umweltschutzes und der Arbeitssicherheit sind Hersteller und Anwender aber bestrebt, wäßrige Sprühdosenlacke zu verwenden. Diese stellen aber neue Anforderungen an die wasserlöslichen oder -dispergierbaren Bindemittel, damit die wäßrigen Sprühdosenlacke das anwendungstechnische Eigenschaftsprofil der konventionellen Sprühdosenlacke, insbesondere hinsichtlich der schnellen Trocknung und der Lagerstabilität, erreichen und übertreffen.

Aus der europäischen Patentschrift EP 0 693 540 A2 sind schnell trocknende wäßrige Sprühdosenlacke bekannt, die Beschichtungen mit hohem Glanz ergeben. Nachteilig für diese bekannten wäßrigen Sprühdosenlacke ist, daß die hierin enthaltenen festen thermoplastischen Polyacrylatharze zunächst mit Alkoholen angelöst und dann wieder mit Wasser verdünnt werden müssen. Um einen hohen Glanz zu erzielen, müssen zusätzlich noch wasserlösliche oder -dispergierbare Polyacrylatharze eines massenmittleren Molukulargewichts von 20.000 bis 200.000, einer Säurezahl von 30 bis 160 und einer Glasübergangstemperatur von 30 bis 140°C zugesetzt werden. Um eine ausreichende Lagerstabilität zu erzielen, sind vergleichsweise hohe Lösemittelgehalte und/oder die Anwendung niedermolekularer Emulgatoren notwendig. Werden die wasserlöslichen oder-dispergierbaren Polyacrylatharze als die alleinigen Bindemittel eingesetzt, resultieren Sprühdosenlacke, die Beschichtungen mit einem deutlich schlechteren Eigenschaftsprofil ergeben, was anhand in der europäischen Patentschrift EP 0 693 540 A2 von Vergleichsversuchen nachgewiesen wird (vgl. hierzu insbesondere Seite 6, Table 5, i. V. m. Seite 7, Table 7).

Aufgabe der vorliegenden Erfindung ist es, neue wäßrige Sprühdosenlacke bereitzustellen, die die Nachteile des Standes der Technik nicht mehr länger aufweisen, sondern auch ohne die Verwendung niedermolekularer Emulgatoren und/oder hoher Lösemittelgehalte lagerstabil sind und matte bis hochglänzende Beschichtungen liefern.

Demgemäß wurde der neue wäßrige Sprühdosenlack gefunden, enthaltend mindestens ein wasserlösliches oder -dispergierbares Copolymerisat von ethylenisch ungesättigten Monomeren, herstellbar durch eine mindestens zweistufige, durch öllösliche thermolabile Radikalbildner initiierte radikalische Copolymerisation in mindestens einem organischen Lösemittel von

(A) mindestens einem ethylenisch ungesättigten Monomeren, das mindestens eine hydrophile funktionelle Gruppe (a) enthält, durch die das Copolymerisat wasserlöslich oder -dispergierbar wird, und

(B) mindestens einem ethylenisch ungesättigten Monomeren, gewählt aus der Gruppe bestehend aus:

  b1) im wesentlichen säuregruppenfreien (Meth)acrylsäurealkyl-oder Cycloalkylestern mit bis zu 20 Kohlenstoffatomen im Alkylrest,
  b2) Momoneren, welche mindestens eine Hydroxylgruppe pro Molekül tragen und im wesentlichen säuregruppenfrei sind,
  b3) Vinylestern von in α-Stellung verzweigten Monocarbonsäuren mit 5 bis 18 Kohlenstoffatomen im Molekül,
  b4) Umsetzungsprodukten aus Acrylsäure und/oder (Meth)acrylsäure mit dem Glycidylester einer in α-Stellung verzweigten Monocarbonsäure mit 5 bis 18 Kohlenstoffatomen je Molekül, oder anstelle der Umsetzungsprodukte eine äquivalente Menge Acryl- und/oder (Meth)acrylsäure, die während oder nach der Polymerisationsreaktion mit dem Glycidylester einer in α-Stellung verzweigten Monocarbonsäure mit 5 bis 18 Kohlenstoffatomen je Molekül umgesetzt wird,
  b5) cyclischen und/oder acyclischen Olefinen,
  b6) (Meth)acrylsäureamiden,
  b7) Epoxidgruppen enthaltenden Monomeren,
  b8) Isocyanatgruppen enthaltenden Monomeren,
  b9) vinylaromatischen Kohlenwasserstoffen,
  b10) Nitrilen,
  b11) Vinylhalogeniden, Vinylidendihalogeniden, N-Vinylamiden, Vinylethern, Vinylestern,
  b12) Allylethern, Allylacetat, Allylpropionat, Allylbutyrat,
  b13) Polysiloxanmakromonomeren, die ein zahlenmittleres Molekulargewicht Mn von 1000 bis 40.000 und im Mittel 0,5 bis 1,5 ethylenisch ungesättigte Doppelbindungen pro Molekül aufweisen, und
b14) Acryloxysilan-enthaltenden Vinylmonomeren,

wobei in mindestens einer Stufe das darin angewandte Monomer (A) als solches oder die darin angewandte Monomermischung (A/B) als solche ein wasserlösliches oder -dispergierbares Polymerisat oder Copolymerisat bilden würde.

Im folgenden wird der neue Sprühdosenlack als "erfindungsgemäßer Sprühdosenlack" bezeichnet.

Weitere erfindungsgemäße Gegenstände gehen aus der Beschreibung hervor.

Im Hinblick auf den Stand der Technik war es überraschend und für den Fachmann nicht vorhersehbar, daß die der vorliegenden Erfindung zugrundeliegende Aufgabe durch die erfindungsgemäße Verwendung eines in mehrstufiger Verfahrens weise hergestellten wasserlöslichen oder-dispergierbaren Copolymerisats von ethylenisch ungesättigten Monomeren (A) und (B) in den erfindungsgemäßen Sprühdosenlacken gelöst werden konnte. Insbesondere war es überraschend, daß die erfindungsgemäßen Sprühdosenlacke auch ohne die Anwendung niedermolekularer Emulgatoren und/oder hoher Gehalte an organischen Lösemitteln lagerbeständig sind und matte bis hochglänzende Beschichtungen liefern.

Der erfindungswesentliche Bestandteil des erfindungsgemäßen Sprühdosenlacks ist das wasserlösliche oder -dispergierbare Copolymerisat von ethylenisch ungesättigten Monomeren.

Erfindungsgemäß wird das Copolymerisat durch eine mindestens zweistufige Copolymerisation hergestellt Nach oben ist die Anzahl der Stufen im wesentlichen nur durch wirtschaftliche Gesichtspunkte begrenzt. So wird der Fachmann die Anzahl der Stufen auf das für das Erzielen des erfindungsgemäßen technischen Effekts notwendige Maß beschränken, um die Reaktionszeiten nicht zu verlängern, ohne hierbei nennenswerte zusätzliche Vorteile zu erzielen. Im allgemeinen sind fünf Stufen ausreichend, um die erfindungsgemäßen Vorteile zu erzielen. Vorzugsweise werden vier, besonders bevorzugt drei Stufen angewandt.

Die Copolymerisation wird durch öllösliche thermolabile Radikalbildner (Initiatoren) initiert. Beispiele geeigneter erfindungsgemäß zu verwendender Initiatoren sind Dialkylperoxide, wie Di-tert.-Butylperoxid, Di-tert.-Amylperoxid oder Dicumylperoxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethyl-hexanoat, tert.-Butylperoxyneodecanoat oder tert.-Butylper-2-ethylhexanoat; Diacylperoxide wie Dibenzoylperoxid; Peroxodicarbonate; Azoinitiatoren wie Azobisisobutyronitril; oder C-C-spaltende Initiatoren wie Benzpinakolsilylether. Es können auch Kombinationen der vorstehend beschriebenen Initiatoren eingesetzt werden.

Die Menge des Initiators kann sehr breit variieren und richtet sich nach den Erfordernissen des Einzelfalls. Erfindungsgemäß ist es von Vorteil, 0,1 bis 20, bevorzugt 0,5 bis 18, besonders bevorzugt 1,0 bis 17, ganz besonders bevorzugt 1,5 bis 16 und insbesondere 2. bis 15 Gew.%, jeweils bezogen auf die Menge an Initiators und Monomeren (A) und (B), zu verwenden.

Erfindungsgemäß wird die radikalische Copolymerisation in mindestens einem organischen Lösemittel durchgeführt. Vorzugsweise werden hierbei wasserlösliche oder -dispergierbare organische Lösemittel eingesetzt. Beispiele geeigneter Lösemittel sind niedermolekulare Alkohole wie Ethanol, Propanol, Isopropanol, n-Butanol, sec.-Butanol oder tert.-Butanol oder niedermolekulare Etheralkohole wie Ethoxypropanol, Methoxypropanol oder Propoxypropanol. Die organischen Lösemittel können außerdem geringe Anteile an höhersiedenden Alkoholen oder Etheralkoholen enthalten, sofern diese nicht die Trocknung des erfindungsgemäßen Sprühdosenlacks beeinträchtigen. Beispiele geeigneter höhersiedender Alkohole sind Diethyloctandiole wie 2,4-Diethyl-1,5-octandiol.

Vorzugsweise werden die organischen Lösemittel in einer Menge verwendet, daß Copolymerisat-Lösungen eines Festkörpergehalts von 50 bis 90, bevorzugt 55 bis 85, besonders bevorzugt 60 bis 80 und insbesondere 65 bis 75 Gew.-%, jeweils bezogen auf die Lösung, resultieren.

Die erfindungsgemäß zu verwendenden Copolymerisate werden aus mindestens einem ethylenisch ungesättigten Monomeren (A) hergestellt, das mindestens eine, vorzugsweise eine, hydrophile funktionelle Gruppe (a) enthält, durch die das Copolymerisat wasserlöslich oder -dispergierbar wird.

Im Rahmen der vorliegenden Erfindung ist unter der Eigenschaft hydrophil die konstitutionelle Eigenschaft eines Moleküls oder einer funktionellen Gruppe zu verstehen, in die wäßrige Phase einzudringen oder darin zu verbleiben. Ergänzend wird auf Römpp Lexikon Lacke und Druckfarben, Georg Thieme Verlag, Stuttgart, New York, 1998, »Hydrophilie«, »Hydrophobie«, Seiten 294 und 295, verwiesen.

Beispiele geeigneter funktioneller Gruppen (a) sind funktionelle Gruppen (a1), die durch Neutralisationsmittel und/oder Quaternisierungsmittel in Kationen überfuhrt werden können, und/oder kationische Gruppen; funktionelle Gruppen (a2), die durch Neutralisationsmittel in Anionen überführt werden können, und/oder anionische Gruppen; oder nichtionische hydrophile Gruppen (a3).

Beispiele geeigneter erfindungsgemäß zu verwendender funktioneller Gruppen (a1), die durch Neutralisationsmittel und/oder Quaternisierungsmittel in Kationen überführt werden können, sind primäre, sekundäre oder tertiäre Aminogruppen, sekundäre Sulfidgruppen oder tertiäre Phoshingruppen, vorzugsweise Aminogruppen oder sekundäre Sulfidgruppen, insbesondere die Aminogruppen.

Beispiele geeigneter erfindungsgemäß zu verwendender kationischer Gruppen (a1) sind primäre, sekundäre, tertiäre oder quaternäre Ammoniumgruppen, tertiäre Sulfoniumgruppen oder quaternäre Phosphoniumgruppen, vorzugsweise die Ammoniumgruppen oder tertiäre Sulfoniumgruppen, insbesondere aber die Ammoniumgruppen.

Beispiele geeigneter erfindungsgemäß zu verwendender funktioneller Gruppen (a2), die durch Neutralisationsmittel in Anionen überführt werden können, sind Carbonsäure-, Sulfonsäure- oder Phosphonsäuregruppen, insbesondere Carbonsäuregruppen.

Beispiele geeigneter erfindungsgemäß zu verwendender anionischer Gruppen (a2) sind Carboxylat-, Sulfonat- oder Phosphonatgruppen, insbesondere Carboxylatgruppen.

Beispiele geeigneter erfindungsgemäß zu verwendender nicht ionischer Gruppen (a3) sind Poly(alkylenether) gruppen wie Methoxy-, Ethoxy-, Propyloxy- oder Butyloxy-polyethylenglykol, -polypropylenglykol oder -polypropylen-polyethylenglykol mit statistischer oder blockartiger Verteilung der Monomerbausteine. Vorzugsweise weisen die Poly (alkylenether)gruppen einen Polymerisationsgrad von 3,0 bis 500 auf.

Beispiele geeigneter Neutralisationsmittel für in Kationen umwandelbare funktionelle Gruppen (a1) sind anorganische und organische Säuren wie Schwefelsäure, Salzsäure, Phosphorsäure, Ameisensäure, Essigsäure, Milchsäure, Dimethylolpropionsäure oder Zitronensäure.

Beispiele für geeignete Neutralisationsmittel für in Anionen umwandelbare funktionelle Gruppen (a2) sind Ammoniak, Ammoniumsalze, wie beispielsweise Ammoniumcarbonat oder Ammoniumhydrogencarbonat, sowie Amine, wie z.B. Trimethylamin, Triethylamin, Tributylamin, Dimethylanilin, Diethylanilin, Triphenylamin, Dimethylethanolamin, Diethylethanolamin, Methyldiethanolamin, Triethanolamin und dergleichen. Bevorzugt wird als Neutralisationsmittel Ammoniak eingesetzt.

Die insgesamt eingesetzte Menge an Neutralisationsmittel wird so gewählt, daß 1 bis 100 Äquivalente, bevorzugt 50 bis 90 Äquivalente der funktionellen Gruppen (a1) oder (a2) des erfindungsgemäß zu verwendenden Copolymerisats neutralisiert werden. Vorzugsweise werden sie nach der Copolymerisation zur Copolymerisat-Lösung hinzugegeben.

Es versteht sich von selbst, daß Monomere (A), die funktionelle Gruppen (a1) oder (a2) enthalten, gemeinsam mit Monomeren (A), die funktionelle Gruppen (a3) enthalten angewandt werden können. Dagegen ist die gemeinsame Verwendung von Monomeren (A) mit funktionellen Gruppen (a1) und von Monomeren (A) mit funktionelle Gruppen (a2) in den allermeisten Fällen von Nachteil, weil hier die Gefahr der Ausfällung von ionischen Komplexen besteht.

Von den funktionellen (potentiell) ionischen Gruppen (a1) und (a2) und funktionellen nicht ionischen Gruppen (a3) sind die (potentiell) anionischen Gruppen (a2) vorteilhaft und werden deshalb besonders bevorzugt verwendet.

Beispiele geeigneter ethylenisch ungesättigter Monomere (A) sind ethylenisch ungesättigte Amine wie Aminoethylacrylat, N-Methylaminoethylacrylat, N,N-Dimethylaminoethylacrylat oder N,N-Diethylaminoethylacrylat oder die entsprechenden Methacrylate, N,N-Diethylaminostyrol (alle Isomere), N,N-Diethylamino-alpha-methylstyrol (alle Isomere), Allylamin, Crotylamin, Vinyliden-bis(4-N,N-dimethylaminobenzol) oder Vinyliden-bis(4-aminobenzol); ethylenisch ungesättigte Säuren wie Acrylsäure, Methacrylsäure, Ethacrylsäure, Crotonsäure, Maleinsäure, Fumarsäure, Itaconsäure oder alpha-Methylvinylbenzoesäure (alle Isomere), ethylenisch ungesättigte Sulfon- oder Phosphonsäuren oder oder deren Teilester wie p-Vinylbenzsolsulfonsäure oder - phosphonsäure oder Maleinsäuremono(meth)acryloyloxyethylester, Bemsteinsäuremono(meth)acryloyloxyethylester oder Phthalsäuremono(meth)acryloyloxyethylester; oder ethylenisch ungesättigte Poly(alkylenether) wie Methoxy-, Ethoxy-, Propyloxy- oder Butyloxy-polyethylenglykol-, - polypropylenglykol- oder -polypropylen-polyethylenglykol-acrylat odermethacrylat, worin die Poly(alkylenether)gruppen vorzugsweise einen Polymerisationsgrad von 3,0 bis 500 aufweisen.

Erfindungsgemäß werden die ethylenisch ungesättigte Monomeren (A) mit mindestens einem Monomeren (B) copolymerisiert, das keine funktionellen Gruppen (a) enthält.

Geeignet erfindungsgemäß zu verwendende ethylenisch ungesättigte Monomere (B) sind -

b1) im wesentlichen säuregruppenfreien (Meth)acrylsäureester wie (Meth)Acrylsäurealkyl- oder -cycloalkylester mit bis zu 20 Kohlenstoffatomen im Alkylrest, insbesondere beispielsweise Methyl-, Ethyl-, Propyl-, n-Butyl-, sec.-Butyl-, tert-Butyl-, Hexyl-, Ethylhexyl-, Stearyl- und Laurylacrylat oder -methacrylat; cycloaliphatische (Meth)acrylsäureester, insbesondere Cyclohexyl-, Isobornyl-, Dicyclopentadienyl-, Octahydro-4,7-methano-1 H-inden-methanol- oder tert-Butylcyclohexyl(meth)acrylat. Diese können in untergeordneten Mengen höherfunktionelle (Meth)Acrylsäurealkyl- oder -cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-indendimethanol- oder Cyclohexan-1,2-, -1,3- oder -1,4-diol-di(meth)acrylat; Trimethylolpropan-di- oder -tri(meth)acrylat; oder Pentaerythrit-di-, -tri-oder -tetra(meth) acrylat enthalten. Im Rahmen der vorliegenden Erfindung sind hierbei unter untergeordneten Mengen an höherfunktionellen Monomeren solche Mengen zu verstehen, welche nicht zur Vernetzung oder Gelierung der Copolymerisate fuhren.

b2) Monomere, welche mindestens eine Hydroxylgruppe pro Molekül tragen und im wesentlichen säuregruppenfrei sind, wie Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid erhältlich sind, insbesondere Hydroxyalkylester der Acrylsäure, Methacrylsäure, Ethacrylsäure oder Crotonsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, - ethacrylat oder -crotonat; oder Hydroxycycloalkylester wie 1,4-Bis(hydroxymethyl)cyclohexan-, Octahydro-4,7-methano-1H-indendimethanol- oder Methylpropandiolmonoacrylat, -monomethacrylat, - monoethacrylat, -monocrotonat, -monomaleinat, -monofumarat odermonoitaconat; oder Umsetzungsprodukte aus cyclischen Estern, wie z.B. epsilon-Caprolacton und diesen Hydroxyalkyl- oder -cycloalkylestern; oder olefinisch ungesättigte Alkohole wie Allylalkohol oder Polyole wie Trimethylolpropanmono- oder diallylether oder Pentaerythritmono-, -di-oder-triallylether (hinsichtlich dieser höherfunktionellen Monomeren (b2) gilt das für die höherfunktionellen Monomeren (a1) Gesagte sinngemäß).

b3) Vinylester von in alpha-Stellung verzweigten Monocarbonsäuren mit 5 bis 18 Kohlenstoffatomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester (b3) können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, insbesondere aber Versatic®-Säuren (vgl. Römpp Lexikon Lacke und Druckfarben, Georg Thieme Verlag, Stuttgart, New York, 1998, »Versatic®-Säuren«, Seiten 605 und 606), eingesetzt.

b4) Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül. insbesondere einer Versatic®-Säure, umgesetzt wird.

b5) Cyclische und/oder acyclische Olefine wie Ethylen, Propylen, But-1-en. Pent-1-en, Hex-1-en, Cyclohexen, Cyclopenten, Norbonen, Butadien, Isopren, Cylopentadien und/oder Dicyclopentadien.

b6) (Meth)Acrylsäureamide wie (Meth)Acrylsäureamid, N-Methyl-, N,N-Dimethyl-, N-Ethyl-, N,N-Diethyl-, N-Propyl-, N,N-Dipropyl-, N-Butyl-, N,N-Dibutyl-, N-Cyclohexyl-, N,N-Cyclohexyl-methyl- und/oder N-Methylol-, N,N-Dimethylol-, N-Methoxymethyl-, N,N-Di(methoxymethyl)-, N-Ethoxymethyl- und/oder N,N-Di(ethoxyethyl)-(meth)acrylsäureamid;

b7) Epoxidgruppen enthaltende Monomere wie der Glycidylester der Acrylsäure, Methacrylsäure, Ethacrylsäure. Crotonsäure, Maleinsäure, Fumarsäure und/oder Itaconsäure.

b8) Isocyanatgruppen enthaltende Monomere wiel-(1-Isocyanato-1-methylethyl)-3-(1-methylethenyl)-benzol (TMI® von der Firma CYTEC), Vinylisocyanat oder Allylisocyanat.

b9) Vinylaromatische Kohlenwasserstoffe wie Styrol, alpha-Alkylstyrole, insbesondere alpha-Methylstyrol, oder Vinyltoluol;

b10) Nitrile wie Acrylnitril und/oder Methacrylnitril.

b11) Vinylverbindungen, insbesondere Vinyl- und/oder Vinylidendihalogenide wie Vinylchlorid, Vinylfluorid, Vinylidendichlorid oder Vinylidendifluorid; N-Vinylamide wie Vinyl-N-methylformamid, N-Vinylcaprolactam, 1-Vinylimidazol oder N-Vinylpyrolidon; Vinylether wie Ethylvinylether, n-Propylvinylether, Isopropylvinylether, n-Butylvinylether, Isobutylvinylether und/oder Vinylcyclohexylether; und/oder Vinylester wie Vinylacetat, Vinylpropionat, Vinylbutyrat, Vinylpivalat und/oder der Vinylester der 2-Methyl-2-ethylheptansäure.

b12) Allylverbindungen, insbesondere Allylether wie Allylmethyl-,-ethyl-, propyl- oder -butylether, Allylacetat, -propionat und-butyrat.

b13) Polysiloxanmakromonomere, die ein zahlenmittleres Molekulargewicht Mn von 1.000 bis 40.000 und im Mittel 0,5 bis 1,5 ethylenisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 1,5 ethylenisch ungesättigte Doppelbindungen pro Molekül aufweisen, wie sie in der DE 38 07 571 A1 auf den Seiten 5 bis 7, der DE 37 06 095 A1 in den Spalten 3 bis 7, der EP 0 358 153 B1 auf den Seiten 3 bis 6, in der US 4,754,014 A1 in den Spalten 5 bis 9, in der DE 44 21 823 A1 oder in der internationalen Patentanmeldung WO 92/22615 auf Seite 12, Zeile 18, bis Seite 18, Zeile 10, beschrieben sind.
und/oder

b14) Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)acrylsäure und/oder Hydroxyalkyl- und/oder -cycloalkylestern der (Meth)Acrylsäure (vgl. Monomere b2).

Erfindungsgemäß sind die Monomeren (b1), (b2) und (b3) von Vorteil und werden deshalb bevorzugt verwendet.

Erfindungsgemäß ist es außerdem von Vorteil, die Monomeren (A) und (B) so auszuwählen, daß das resultierende Copolymerisat in seinem Eigenschaftsprofil im wesentlichen durch die Acrylate und Methacrylate bestimmt wird.

Für das erfindungsgemäß zu verwendende Copolymerisat ist es wesentlich, daß in mindestens einer Stufe, vorzugsweise in einer Stufe, das darin angewandte Monomer (A) als solches oder die darin angewandte Monomermischung (A/B) als solche ein wasserlösliches oder -dispergierbares Polymerisat oder Copolymerisat bilden würde. Der Fachmann kann das Verhältnis der Monomeren (A) und (B) in der Monomermischung, die zu einer Wasserlöslichkeit oder -dispergierbarkeit führen würde, sowie den Gehalt an Monomeren (A) insgesamt, der die Wasserlöslichkeit oder -dispergierbarkeit der Copolymerisate bewirkt, leicht anhand seines allgemeinen Fachwissens gegebenenfalls unter Zuhilfenahme einfacher orientierender Versuche ermitteln. Zu dem allgemeinen Fachwissen wird auf Römpp Lexikon Lacke und Druckfarben, Georg Thieme Verlag, Stuttgart, New York, 1998, »Wasserlacke« bis »Wasserlöslichkeit«, Seite 624 und 625 verwiesen.

Diese "wasserlösliche Stufe" bildet die erste oder die letzte Stufe der mindestens zweistufigen Copolymerisation. Welcher Variante der Vorzug gegeben wird, richtet sich nach den Erfordernissen des Einzelfalls und kann anhand des allgemeinen Fachwissens gegebenenfalls unter Zuhilfenahme einfacher Vorversuche festgelegt werden.

Erfindungsgemäß ist es von Vorteil, wenn in mindestens einer Stufe das darin angewandte Monomer (A) oder (B) oder die darin angewandte Monomermischung (A/B) ein Polymerisat oder Copolymerisat mit einer Glasübergangstemperatur nach Fox von 30°C oder weniger bilden würde.

Die Glasübergangstemperatur von Acrylatcopolymerisaten wird bekanntermaßen durch Art und Menge der eingesetzten Monomere bestimmt. Die Auswahl der Monomeren kann vom Fachmann unter Zuhilfenahme der folgenden Formel von Fox getroffen werden, nach welcher die Glasübergangstemperaturen näherungsweise berechnet werden können.

$$1/Tg \quad = \sum_{n=1}^{n=x} W_n / Tg_n; \qquad \sum_n W_n = 1;$$

Tg = Glasübergangstemperatur des Polyacrylatharzes
$W_n$ = Gewichtsanteil des n-ten Monomers
$Tg_n$ = Glasübergangstemperatur des Homopolymers aus dem n-ten Monomer
x = Anzahl der verschiedenen Monomeren

Weitere Vorteile resultieren, wenn die Monomeren (A) und (B) so ausgewählt werden, daß sie in ihrer theoretischen Summe eine Glasübergangstemperatur nach Fox von 30°C oder weniger ergeben würden.

Das Molekulargewicht der erfindungsgemäß zu verwendenden Copolymerisate kann breit variieren. Vorzugsweise weist es ein zahlenmittleres Molekulargewicht von 5.000 bis 100.000, bevorzugt 6.000 bis 50.000, besonders bevorzugt 7.000 bis 40.000 ganz besonders bevorzugt 8.000 bis 35.000 und insbesondere 9.000 bis 30.000 Dalton auf.

Weitere Vorteile resultieren, wenn das massenmittlere Molekulargewicht bei 10.000 bis 500.000, bevorzugt 11.000 bis 300.000, besonders bevorzugt 12.000 bis 200.000, ganz besonders bevorzugt 13.000 bis 100.000 und insbesondere 14.000 bis 80.000 Dalton liegt.

Die organische Lösung, worin die radikalische Copolymerisation durchgeführt wird, kann außer den vorstehend beschriebenen Bestandteilen noch weitere geeignete Stoffe enthalten.

Beispiele geeigneter Stoffe sind Molekulargewichtsregler wie Mercaptoethanol, Dodecylmercaptan, quadratisch-planare Kobaltkomplexe, captodative Verbindungen oder Verbindungen, die nach dem Initiator-Transfer-Terminierungsmechanismus regeln, wie Tetraethylthiuram oder das Tetramethylpiperidinyl-Radikal. Diese Verbindungen können von Anfang an in der organischen Lösung vorhanden sein oder zu bestimmten Zeitpunkten und/oder Stufen der radikalischen Copolymerisation hinzugegeben werden.

Die organische Lösung kann außerdem noch polymerisierbare und/oder nicht polymerisierbare, wasserlösliche und/oder nicht wasserlösliche Oligomere und Polymere enthalten. Im Rahmen der vorliegenden Erfindung werden unter Oligomeren Harze verstanden, die mindestens 2 bis 15 wiederkehrende Monomereinheiten in ihrem Molekül enthalten. Im Rahmen der vorliegenden Erfindung werden unter Polymeren Harze verstanden, die mindestens 10 wiederkehrende Monomereinheiten in ihrem Molekül enthalten. Ergänzend wird zu diesen Begriffen auf Römpp Lexikon Lacke und Druckfarben, Georg Thieme Verlag, Stuttgart, New York, 1998, »Oligomere«, Seite 425, verwiesen.

Beispiele geeigneter Harze sind statistisch, alternierend und/oder blockartig aufgebaute lineare und/oder verzweigte und/oder kammartig aufgebaute (Co)Polymerisate von ethylenisch ungesättigten Monomeren, beispielsweise den vorstehend beschriebenen, oder Polyadditionsharze und/oder Polykondensationsharze. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze« verwiesen.

Des weiteren können die Copolymerisate während und/oder nach der Copolymerisation mit Mono-, Di- und/oder Polyisocyanaten, -carbonsäuren und/oder -epoxiden modifiziert werden. Bei der Modifizierung ist darauf zu achten, daß die Wasserlöslichkeit oder -dispergierbarkeit der Copolymerisate nicht verlorengeht.

Methodisch gesehen weist die radikalische Copolymerisation keine Besonderheiten auf, sondern kann in den auf diesem Gebiet üblichen und bekannten Vorrichtungen, insbesondere in Rührkesseln, Rohrreaktoren, Schlaufenreaktoren oder Taylorreaktoren, sowie gegebenenfalls unter Druck, insbesondere bei der Anwendung höherer Temperaturen und/oder leicht flüchtiger Monomere (A) und/oder (B), durchgeführt werden, wobei die Taylorreaktoren so ausgelegt werden, daß auf der gesamten Reaktorlänge die Bedingungen der Taylorströmung erfüllt sind, selbst wenn sich die kinematische Viskosität des Reaktionsmediums aufgrund der Copolymerisation stark ändert, insbesondere ansteigt.

Der Gehalt des erfindungsgemäßen Sprühdosenlacks an erfindungsgemäß zu verwendendem Copolymerisat kann sehr breit variieren und richtet sich nach den jeweiligen Verwendungszweck und nach den sonstigen hierin enthaltenen Bestandteilen. Vorzugsweise liegt der Gehalt bei 5,0 bis 70, bevorzugt 6,0 bis 65, besonders bevorzugt 7,0 bis 60, ganz besonders bevorzugt 8,0 bis 55 und insbesondere neun, 0 bis 50 Gew.-%, jeweils bezogen auf den erfindungsgemäßen Sprühdosenlack.

Vorzugsweise enthält der erfindungs gemäße Sprühdosenlack Wasser und organische Lösemittel in dem vom Stand der Technik her bekannten Mengen. Beispielhaft wird auf die europäische Patentschrift EP 0 693 540 A2 verwiesen.

Darüber hinaus kann der erfindungsgemäße Sprühdosenlack übliche und bekannte Pigmente enthalten. Beispiele geeigneter Pigmente sind aus Römpp Lexikon Lacke und Druckfarben, Georg Thieme Verlag, 1998, Seiten 176: »Effektpigmente«, Seiten 380 und 381: »Metalloxid-Glimmer-Pigmente« bis »Metallpigmente«, Seiten 180 und 181: »Eisenblau-Pigmente« bis »Eisenoxidschwarz«, Seiten 451 bis 453: »Pigmente« bis »Pigmentsvolumenkonzentration«, Seite 563: »Thioindigo-Pigmente« oder Seite 567 »Titandioxid-Pigmente« bekannt.

Außerdem kann der erfindungsgemäße Sprühdosenlack übliche und bekannte Wasserlack-Additive enthalten. Beispiele geeigneter Wasserlack-Additive sind aus Römpp Lexikon Lacke und Druckfarben, Georg Thieme Verlag, 1998, Seiten 623 und 624: »Wasserlack-Additive« oder der europäischen Patentschrift EP 0 693 540 A2, Seite 5, Zeilen 6 bis 10, bekannt. Vorzugsweise werden sie in den dort angegebenen Mengen verwendet.

Der erfindungsgemäße Sprühdosenlack kann mit den üblichen und bekannten Treibmitteln appliziert werden. Beispiele geeigneter Treibmittel sind niedrig siedende Flüssigkeiten wie Dimethylether, aliphatische Kohlenwasserstoffe, chlorfluorierte Kohlenwasserstoffe, fluorierte Kohlenwasserstoffe, insbesondere aber Dimethylether. Zusätzlich können auch gasförmige Treibmittel wie Stickstoff, Kohlendioxid oder Lachgas verwendet werden.

Der erfindungsgemäße Sprühdosenlack dient der Beschichtung von grundierten und ungrundierten Substraten.

Als Substrate kommen alle zu lackierenden Oberflächen in Betracht; das sind z. B. Metalle, Kunststoffe, Holz, Keramik, Stein, Textil, Faserverbunde, Leder, Glas, Glasfasern, Glas- und Steinwolle, mineral- und harzgebundene Baustoffe, wie Gips- und Zementplatten oder Dachziegel, sowie Verbunde dieser Materialien. Demnach ist der erfindungsgemäße Sprühdosenlack auch für die Anwendung außerhalb der Automobillackierung geeignet. Hierbei kommt er insbesondere für die Lackierung von Möbeln und für die industrielle Lackierung, inklusive Coil Coating, Container Coating und die Imprägnierung oder Beschichtung elektrotechnischer Bauteile, in Betracht. Im Rahmen der industriellen Lackierungen eignet er sich für die Lackierung praktisch aller Teile für den privaten oder industriellen Gebrauch wie Radiatoren, Haushaltsgeräte, Kleinteile aus Metall wie Schrauben und Muttern, Radkappen, Felgen, Emballagen oder elektrotechnische Bauteile wie Motorwicklungen oder Transformatorwicklungen.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Mit dem erfindungsgemäßen Sprühdosenlack können auch grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden. Die zu lackierenden Kunststoffe können selbstverständlich auch Polymerblends, modifizierte Kunststoffe oder faserverstärkte Kunststoffe sein. Es können auch die üblicherweise im Fahrzeugbau, insbesondere Kraftfahrzeugbau, eingesetzten Kunststoffe zum Einsatz kommen. Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Aufgrund seiner vorteilhaften technischen Eigenschaften kann er auch der Beschichtung von besonders empfindlichen Substraten wie Kunstwerken oder Antiquitäten dienen.

Besondere Vorteil resultieren hierbei, wenn der erfindungsgemäße Sprühdosenlack kleinflächig, beispielsweise zu Reparaturzwecken, angewandt wird.

Die aus dem erfindungsgemäßen Sprühdosenlack hergestellten erfindungsgemäßen Beschichtungen haften sehr fest auf den grundierten und ungrundierten Substraten. Sie sind hart, flexibel, lösemittel-, wasser- und alkaliresistent und matt bis hochglänzend.

**Beispiel**

**Herstellung eines erfindungsgemäß zu verwendenden Copolymerisats und eines erfindungsgemäßen Sprühdosenlacks**

In einem für die radikalische Polymerisation geeigneten 41-Stahlreaktor mit Rührer, Rückflußkühler und Zulaufgefäßen wurden 583 Gewichtsteile Propanol vorgelegt und auf 95°C erhitzt. Zu der Vorlage wurden während 5 Minuten eine Mischung aus 2,2 Gewichtsteilen eines handelsüblichen radikalischen Initiators (Trigonox® 421) und 13 Gewichtsteilen Propanol zudosiert.

Gleichzeitig beginnend, wurde in der ersten Stufe zum einen eine Mischung aus 83,2 Gewichtsteilen Acrylsäure, 42 Gewichtsteilen Styrol und 290 Gewichtsteilen Butylacrylat während zwei Stunden und zum anderen 3,5% einer Mischung aus 181 Gewichtsteilen Trigonox® 421 und 181 Gewichtsteilen Propanol während 30 Minuten gleichmäßig zudosiert. Anschließend wurde die resultierende Reaktionsmischung weitere 20 Minuten unter Rühren auf 95°C erhitzt.

In der zweiten Stufe wurden zu der Reaktionsmischung, gleichzeitig beginnend, zum einen eine Mischung aus 86,2 Gewichtsteilen Styrol und 115 Gewichtsteilen Butylacrylat während zwei Stunden und zum anderen 6,2% der vorstehend beschriebenen Initiatorlösung während einer Stunden gleichmäßig zudosiert. Anschließend wurden die resultierende Reaktionsmischung weitere 60 Minuten unter Rühren auf 95°C erhitzt.

In der dritten Stufe wurden zu der Reaktionsmischung, gleichzeitig beginnend, zum einen eine Mischung aus 180 Gewichtsteilen Methylmethacrylat, 315 Gewichtsteilen Styrol und 495 Gewichtsteilen Butylacrylat während vier Stunden und zum anderen 48,1 % der vorstehend beschriebenen Initiatorlösung während vier Stunden gleichmäßig zudosiert. Abschließend wurden noch 42,2% der Initiatorlösung während zwei Stunden gleichmäßig zudosiert. Hiernach wurde das resultierende Reaktionsgemisch noch während 1,5 Stunden bei 95°C gehalten.

Die resultierende Copolymerisat-Lösung wies einen Festkörpergehalt von 70,6 Gew.% (2g Einwaage + 2g Xylol/eine Stunde/130 °C) auf. Das Copolymerisat wies ein zahlenmittleres Molekulargewicht von 15.981 und ein massenmittleres Molekulargewicht von 53.316 sowie eine Säurezahl von 41,8 mg KOH/g auf.

Die Copolymerisat-Lösung wurde mit 75,6 Gewichtsteilen 25 prozentiger Ammoniaklösung auf einen Festkörpergehalt von 37 Gew.-% eingestellt.

Die resultierende wäßrige Copolymerisat-Lösung war hervorragend für die Herstellung von Sprühdosenlacken geeignet. Zu diesem Zweck wurde sie mit Wasser auf die gewünschte Spritzviskosität eingestellt und in einer Sprühdose mit Dimethylether als Treibmittel versetzt. Der Sprühdosenlack erwies sich als ausgesprochen lagerstabil auch ohne Zusatz von niedermolekularen Emulgatoren. Der Sprühdosenlack wurde auf die Oberfläche von Glasplatten gesprüht und lieferte schnell trocknende, harte, haftfeste hochglänzende, alkaliresistente Beschichtungen.

**Patentansprüche**

1. Wässriger Sprühdosenlack, enthaltend mindestens ein wasserlösliches oder -dispergierbares Copolymerisat von ethylenisch ungesättigten Monomeren, herstellbar durch eine mindestens zweistufige, durch öllösliche thermolabile Radikalbildner initiierte radikalische Copolymerisation in mindestens einem organischen Lösemittel von

   (A) mindestens einem ethylenisch ungesättigten Monomeren, das mindestens eine hydrophile funktionelle Gruppe (a) enthält, durch die das Copolymerisat wasserlöslich oder-dispergierbar wird, und
   (B) mindestens ein ethylenisch ungesättigtes Monomer, gewählt aus der Gruppe bestehend aus

   b1) im wesentlichen säuregruppenfreien (Meth)acrylsäurealkyl- oder Cycloalkylestern mit bis zu 20 Kohlenstoffatomen im Alkylrest,
   b2) Momoneren, welche mindestens eine Hydroxylgruppe pro Molekül tragen und im wesentlichen säuregruppenfrei sind,
   b3) Vinylestern von in $\alpha$-Stellung verzweigten Monocarbonsäuren mit 5 bis 18 Kohlenstoffatomen im Molekül,
   b4) Umsetzungsprodukten aus Acrylsäure und/oder (Meth)acrylsäure mit dem Glycidylester einer in $\alpha$-Stellung verzweigten Monocarbonsäure mit 5 bis 18 Kohlenstoffatomen je Molekül, oder anstelle der Umsetzungsprodukte eine äquivalente Menge Acryl-und/oder (Meth)acrylsäure, die während oder nach der Polymerisationsreaktion mit dem Glycidylester einer in $\alpha$-Stellung verzweigten Monocarbonsäure mit 5 bis 18 Kohlenstoffatomen je Molekül umgesetzt wird,
   b5) cyclischen und/oder acyclischen Olefinen,
   b6) (Meth)acrylsäureamiden,
   b7) Epoxidgruppen enthaltenden Monomeren,
   b8) Isocyanatgruppen enthaltenden Monomeren,
   b9) vinylaromatischen Kohlenwasserstoffen,
   b10) Nitrilen,
   b11) Vinylhalogeniden, Vinylidendihalogeniden, N-Vinylamiden, Vinylethern, Vinylestern,
   b12) Allylethern, Allylacetat, Allylpropionat, Allylbutyrat,
   b13) Polysiloxanmakromonomeren, die ein zahlenmittleres Molekulargewicht Mn von 1000 bis 40.000 und im Mittel 0,5 bis 1,5 ethylenisch ungesättigte Doppelbindungen pro Molekül aufweisen, und
   b14) Acryloxysilan-enthaltenden Vinylmonomeren,

   wobei in mindestens einer Stufe das darin angewandte Monomer (A) als solches oder die darin angewandte Monomermischung (A/B) als solche ein wasserlösliches oder -dispergierbares Polymerisat oder Copolymerisat bilden würde.

2. Wäßriger Sprühdosenlack nach Anspruch 1, **dadurch gekennzeichnet, daß** das Copolymerisat ein zahlenmittleres Molekulargewicht von 5.000 bis 100.000 Dalton und ein massenmittleres Molekulargewicht von 10.000 bis 500.000 Dalton aufweist.

3. Wäßriger Sprühdosenlack nach Anspruch 1 oder 2, **dadurch gekennzeichnet, daß** die Stufe, worin das darin angewandte Monomer (A) als solches oder die darin angewandte Monomermischung (A/B) als solche ein wasserlösliches oder -dispergierbares Polymerisat oder Copolymerisat bilden würde, die erste oder die letzte Stufe der mindestens zweistufigen Copolymerisation bildet.

4. Wäßriger Sprühdosenlack nach einem der Ansprüche 1 bis 3, **dadurch gekennzeichnet, daß** die mehrstufige Copolymerisation bis zu fünf Stufen umfaßt.

5. Wäßriger Sprühdosenlack nach einem der Ansprüche 1 bis 4, **dadurch gekennzeichnet, daß** in mindestens einer Stufe das darin angewandte Monomer (A) oder (B) oder die darin angewandte Monomermischung (A/B) ein Polymerisat oder Copolymerisat mit einer Glasübergangstemperatur nach Fox von 30°C oder weniger bilden würde.

6. Wäßriger Sprühdosenlack nach einem der Ansprüche 1 bis 5, **dadurch gekennzeichnet, daß** die Monomeren (A) und (B) so ausgewählt werden, daß sie in ihrer theoretischen Summe eine Glasübergangstemperatur nach Fox von 30°C oder weniger ergeben würden.

7. Wäßriger Sprühdosenlack nach einem der Ansprüche 1 bis 6, **dadurch gekennzeichnet, daß** das Monomer (A) als funktionelle Gruppe(n) (a)

(a1) funktionelle Gruppen, die durch Neutralisationsmittel und/oder Quaternisierungsmittel in Kationen überführt werden können, und/oder kationische Gruppen,
oder
(a2) funktionelle Gruppen, die durch Neutralisationsmittel in Anionen überführt werden können, und/oder anionische Gruppen,
und/oder
(a3) nichtionische hydrophile Gruppen

enthält.

8. Wäßriger Sprühdosenlack nach Anspruch 7, **dadurch gekennzeichnet, daß** die funktionellen Gruppen (a2) Carbonsäuregruppen oder Carboxylatgruppen, die funktionellen Gruppen (a1) Aminogruppen oder Ammoniumgruppen und die funktionellen Gruppen (a3) Polyalkylenethergruppen sind.

9. Wäßriger Sprühdosenlack nach einem der Ansprüche 1 bis 8, **dadurch gekennzeichnet, daß** die Copolymerisate während und/oder nach der Copolymerisation mit Mono-, Di- und/oder Polyisocyanaten, - carbonsäuren und/oder -epoxiden modifiziert werden.

10. Wäßriger Sprühdosenlack nach einem der Ansprüche 1 bis 9, **dadurch gekennzeichnet, daß** er mindestens ein Treibmittel enthält.

11. Wäßriger Sprühdosenlack nach einem der Ansprüche 1 bis 10, **dadurch gekennzeichnet, daß** er mindestens einen Zusatzstoff enthält.


**Claims**

1. Aqueous spray can coating material comprising at least one water-soluble or water-dispersible copolymer of ethylenically unsaturated monomers, said copolymer being preparable by an at least two-stage free-radical copolymerization, initiated by oil-soluble thermolabile free-radical initiators, in at least one organic solvent, of

(A) at least one ethylenically unsaturated monomer containing at least one hydrophilic functional group (a) which renders the copolymer water-soluble or water-dispersible, and
(B) at least one ethylenically unsaturated monomer selected from the group consisting of

b1) (meth)acrylic alkyl or cycloalkyl esters having up to 20 carbon atoms in the alkyl radical and being substantially free from acid groups,
b2) monomers which carry at least one hydroxyl group per molecule and are substantially free from acid groups,
b3) vinyl esters of alpha-branched monocarboxylic acids having 5 to 18 carbon atoms in the molecule,
b4) reaction products of acrylic acid and/or methacrylic acid with the glycidyl ester of an alpha-branched monocarboxylic acid having 5 to 18 carbon atoms per molecule, or, instead of the reaction products, an equivalent amount of acrylic and/or methacrylic acid which is reacted, during or after the polymerization reaction, with the glycidyl ester of an alpha-branched monocarboxylic acid having 5 to 18 carbon atoms per molecule,
b5) cyclic and/or acyclic olefins,
b6) (meth)acrylamides,
b7) monomers containing epoxide groups,
b8) monomers containing isocyanate groups,
b9) vinylaromatic hydrocarbons,
b10) nitriles,
b11) vinyl-halides, vinylidene dihalides, N-vinylamides, vinyl ethers, vinyl esters,
b12) allyl ethers, allyl acetate, allyl propionate, allyl butyrate,
b13) polysiloxane macromonomers which have a number-average molecular weight Mn of from 1000 to 40 000 and contain on average from 0.5 to 1.5 ethylenically unsaturated double bonds per molecule, and,
b14) acryloxysilane-containing vinyl monomers,

where, in at least one stage, the monomer (A) employed therein or the monomer mixture (A/B) employed therein would per se form a water-soluble or water-dispersible polymer or copolymer.

2. Coating material according to Claim 1, **characterized in that** the copolymer has a number-average molecular weight of from 5000 to 100 000 daltons and a mass-average molecular weight of from 10 000 to 500 000 daltons.

3. Coating material according to Claim 1 or 2, **characterized in that** the stage in which the monomer (A) employed therein or the monomer mixture (A/B) employed therein would per se form a water-soluble or water-dispersible polymer or copolymer constitutes the first or the last stage of the at least two-stage copolymerization.

4. Coating material according to any of Claims 1 to 3, **characterized in that** the multistage copolymerization encompasses up to five stages.

5. Coating material according to any of Claims 1 to 4, **characterized in that**, in at least one stage, the monomer (A) or (B) employed therein or the monomer mixture (A/B) employed therein would form a polymer or copolymer having a glass transition temperature according to Fox of 30°C or less.

6. Coating material according to any of Claims 1 to 5, **characterized in that** the monomers (A) and (B) are selected such that in their theoretical sum they would give rise to a glass transition temperature according to Fox of 30°C or less.

7. Coating material according to any of Claims 1 to 6, **characterized in that** the monomer (A) comprises as functional group(s) (a)

(a1) functional groups which can be converted into cations by neutralizing agents and/or quaternizing agents, and/or cationic groups,
or
(a2) functional groups which can be converted into anions by neutralizing agents, and/or anionic groups,
and/or
(a3) nonionic hydrophilic groups.

8. Coating material according to Claim 7, **characterized in that** the functional groups (a2) are carboxylic acid groups or carboxylate groups, the functional groups (a1) are amino groups or ammonium groups, and the functional groups (a3) are polyalkylene ether groups.

9. Coating material according to any of Claims 1 to 8, **characterized in that** the copolymers are modified during and/or after the copolymerization, with mono-, di- and/or polyisocyanates, -carboxylic acids and/or -epoxides.

10. Coating material according to any of Claims 1 to 9, **characterized in that** it comprises at least one propellant.

11. Coating material according to any of Claims 1 to 10, **characterized in that** it comprises at least one additive.


**Revendications**

1. Laque aqueuse en bombe à aérosol, contenant au moins un copolymère soluble ou dispersible dans l'eau de monomères éthyléniquement insaturés, pouvant être préparée par une copolymérisation radicalaire, au moins en deux étapes, initiée par des agents de formation de radicaux thermolabiles, solubles dans l'huile, dans au moins un solvant, de

(A) au moins un monomère éthyléniquement insaturé, qui contient au moins un groupe fonctionnel hydrophile (a), grâce auquel le copolymère devient soluble ou dispersible dans l'eau, et
(B) au moins un monomère éthyléniquement insaturé, choisi dans le groupe formé par

b1) les esters alkyliques ou cycloalkyliques de l'acide (méth)acrylique, essentiellement exempts de groupes acides, comprenant jusqu'à 20 atomes de carbone dans le radical alkyle,
b2) les monomères qui portent au moins un groupe hydroxyle par molécule et qui sont essentiellement exempts de groupes acides,
b3) les esters vinyliques d'acides monocarboxyliques ramifiés en position $\alpha$ avec 5 à 18 atomes de carbone dans la molécule,

b4) les produits de transformation de l'acide acrylique et/ou méthacrylique avec les esters glycidyliques d'un acide monocarboxylique ramifié en position α comprenant 5 à 18 atomes de carbone par molécule ou, au lieu du produit de transformation, une quantité équivalente d'acide acrylique et/ou méthacrylique qui est transformée pendant ou après la réaction de polymérisation avec l'ester glycidylique d'un acide monocarboxylique ramifié en position α comprenant 5 à 18 atomes de carbone par molécule,

b5) les oléfines cycliques et/ou acycliques,

b6) les amides de l'acide (méth)acrylique,

b7) les monomères contenant des groupes époxyde,

b8) les monomères contenant des groupes isocyanate,

b9) les hydrocarbures vinylaromatiques,

b10) les nitriles,

b11) les halogénures de vinyle, les dihalogénures de vinylidène, les N-vinylamides, les vinyléthers, les esters de vinyle,

b12) les allyléthers, l'acétate d'allyle, le propionate d'allyle, le butyrate d'allyle,

b13) les macromonomères de polysiloxane, qui présentent un poids moléculaire numérique moyen Mn de 1 000 à 40 000 et en moyenne 0,5 à 1,5 double liaison éthyléniquement insaturée par molécule, et

b14) les monomères de vinyle contenant acryloxysilane,

où, dans au moins une étape, le monomère (A) qui y est utilisé tel quel ou le mélange de monomères (A/B) qui y est utilisé tel quel forment un polymère ou un copolymère soluble ou dispersible dans l'eau.

**2.** Laque aqueuse en bombe à aérosol selon la revendication 1, **caractérisée en ce que** le copolymère présente un poids moléculaire numérique moyen de 5 000 à 100 000 Daltons et un poids moléculaire massique moyen de 10 000 à 500 000 Daltons.

**3.** Laque aqueuse en bombe à aérosol selon la revendication 1 ou 2, **caractérisée en ce que** l'étape dans laquelle le monomère (A) qui y est utilisé tel quel ou le mélange de monomères (A/B) qui y est utilisé tel quel forme un polymère ou un copolymère soluble ou dispersible dans l'eau représente la première ou la dernière étape de ladite copolymérisation au moins en deux étapes.

**4.** Laque aqueuse en bombe à aérosol selon l'une quelconque des revendications 1 à 3, **caractérisée en ce que** la copolymérisation en plusieurs étapes comprend jusqu'à cinq étapes.

**5.** Laque aqueuse en bombe à aérosol selon l'une quelconque des revendications 1 à 4, **caractérisée en ce que** dans au moins une étape, le monomère (A) ou (B) qui y est utilisé ou le mélange de monomères (A/B) qui y est utilisé forme un polymère ou un copolymère présentant une température de transition vitreuse selon Fox de 30°C ou moins.

**6.** Laque aqueuse en bombe à aérosol selon l'une quelconque des revendications 1 à 5, **caractérisée en ce que** les monomères (A) et (B) sont choisis de telle manière qu'ils résultent, dans leur somme théorique, en une température de transition vitreuse selon Fox de 30°C ou moins.

**7.** Laque aqueuse en bombe à aérosol selon l'une quelconque des revendications 1 à 6, **caractérisée en ce que** le monomère (A) contient, comme groupe(s) fonctionnel(s) (a)

(a1) des groupes fonctionnels qui peuvent être transformés par des agents de neutralisation et/ou de quaternisation en cations, et/ou des groupes cationiques
ou
(a2) des groupes fonctionnels qui peuvent être transformés par des agents de neutralisation et/ou de quaternisation en anions, et/ou des groupes anioniques
et/ou
(a3) des groupes hydrophiles non ioniques.

**8.** Laque aqueuse en bombe à aérosol selon la revendication 7, **caractérisée en ce que** les groupes fonctionnels (a2) sont des groupes acide carboxylique
ou carboxylate, les groupes fonctionnels (a1) sont des groupes amino ou ammonium et les groupes fonctionnels (a3) sont des groupes polyalkylène-éther.

9. Laque aqueuse en bombe à aérosol selon l'une quelconque des revendications 1 à 8, **caractérisée en ce que** les copolymères sont modifiés pendant et/ou après la copolymérisation avec des monoisocyanates, des diisocyanates et/ou des polyisocyanates, des acides monocarboxyliques, dicarboxyliques et/ou polycarboxyliques et/ou des monoépoxydes, des diépoxydes et/ou des polyépoxydes.

10. Laque aqueuse en bombe à aérosol selon l'une quelconque des revendications 1 à 9, **caractérisée en ce qu'**elle contient au moins un agent propulseur.

11. Laque aqueuse en bombe à aérosol selon l'une quelconque des revendications 1 à 10, **caractérisée en ce qu'**elle contient au moins un additif.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0693540 A2
- DE 3807571 A1
- DE 3706095 A1
- EP 0358153 B1
- US 4754014 A1
- DE 4421823 A1
- WO 9222615 A

**In der Beschreibung aufgeführte Nicht-Patentliteratur**

- Römpp Lexikon Lacke und Druckfarben. Georg Thieme Verlag, 1998, 294, 295
- Römpp Lexikon Lacke und Druckfarben. Georg Thieme Verlag, 1998, 605, 606
- Römpp Lexikon Lacke und Druckfarben. Georg Thieme Verlag, 1998, 624, 625
- Römpp Lexikon Lacke und Druckfarben. Georg Thieme Verlag, 1998, 425
- Römpp Lexikon Lacke und Druckfarben. Georg Thieme Verlag, 1998, 457
- ROMPP LEXIKON LACKE UND DRUCKFARBEN. 463, 464
- Römpp Lexikon Lacke und Druckfarben. Georg Thieme Verlag, 1998, 176
- ROMPP LEXIKON LACKE UND DRUCKFARBEN. 380, 381
- ROMPP LEXIKON LACKE UND DRUCKFARBEN. 180, 181
- ROMPP LEXIKON LACKE UND DRUCKFARBEN. 451-453
- Römpp Lexikon Lacke und Druckfarben. Georg Thieme Verlag, 1998, 623, 624